# EUROPEAN PATENT APPLICATION

(11) **EP 4 592 925 A1**
(43) Date of publication of application: **30.07.2025**
(21) Application number: 24386007.9
(22) Date of filing: 24.01.2024
(51) Int. Cl.: G06Q 10/10, G06F 16/35, G06F 40/284, G06Q 10/20

(54) **EFFICIENT AND COMPREHENSIBLE ALARM TEXT CLUSTERING**

(71) Applicant: Hitachi Energy Germany AG, 68309 Mannheim (DE)
(72) Inventor: Chakravorty, Jhelum, Montréal H3G1Y2 (CA); Dalle Ave, Giancarlo, Toronto, M9P1J5 (CA); Hilliard, Antony Foster, Montréal, Quebec, H2E1W4 (CA); Mitrentsis, Georgios, 70372 Stuttgart (DE); Schmitt, Susanne, 69115 Heidelberg (DE); Marino, David Giovanni, Montréal, H2R 2P1 (CA); Hafiz, Faeza, Apex, NC 27502 (US)
(74) Representative: Vossius & Partner Patentanwälte Rechtsanwälte mbB

(57) **Abstract**

Methods for management of alarm text data for received alarms, which can involve processing the alarm text data for clustering to generate processed alarm text data; clustering the processed alarm text data into first clusters through executing a first clustering algorithm, the first clustering algorithm configured to be facilitated via accelerated processing; for the first clusters not meeting a metric, executing a second clustering algorithm on the first clusters to form second clusters that are representative of subgroups of the first clusters with improved homogeneity, the second clustering algorithm being different from the first clustering algorithm; executing a tagging process on the second clusters and ones of the first clusters that meet the metric to tag the second clusters and the ones of the first clusters that meet the metric into groups to form tagged cluster groups; and providing the tagged cluster groups to be displayed on the user interface.

## Description

### BACKGROUND

### Field

The present disclosure is generally directed to alarm systems, and more specifically, to systems and methods that facilitate efficient and comprehensible alarm text clustering for user interfaces.

### Related Art

The quantity of configured alarms has been increasing over time in many industries, including electric power networks as distributed energy, intelligent devices, smart sensors, smart meters, and other big data sources are adopted. The core problem of alarm management is when the alarm system increases real time operator workload during system disturbances (ranging from routine thunderstorms to critical contingencies) when fast, reliable human performance is most needed.

During periods of so-called alarm floods (or avalanches), when the alarm rate is higher than an operator can effectively deal with, or for when the alarm rate is such that it is difficult to present the alarms in a user interface, methods of grouping related alarms and condensing the information presented to the operator can improve their response and displayability. Furthermore, a high volume of alarms creates a problem of scale in retroactively auditing the existing alarm systems, as significant manual labor and time are needed to assess the quality of each alarm individually.

In a related art implementation, incoming alarms can be clustered and grouped into issue ticket clusters according to the string-based distance measures. Such distance measures can involve edit distance, longest common string, various fields such as device name, device type, and so on.

In another related art implementation, there can be a system which contains a vendor neutral, flexible and efficient alarm grouping and routing algorithm using enterprise level and alarm attributes for filtering. Such related art approaches use rule-based alarm assignments to handle diverse alarm signal parameters within large volumes of individual signals coming from multiple sources. Many of the alarm signals may be deemed as unactionable signals and thereby eliminated.

In another related art system, there can be a combination of a network model and domain specific cause/effect pattern models that are applied to the alarms. In such a related art system, alarms are mapped to both the network location and the cause/effect type, and the resulting graph is backtracked to find the root cause alarm indicating an initiating event.

### SUMMARY

The quantity of alarms configured in modern power systems often leads to alarm floods when the alarm rate is higher than an operator can effectively deal with. Meaningfully grouping related alarms together is not a trivial problem, but has high potential benefit for the operator as grouping can be used to exclude irrelevant data and condense otherwise overwhelming information for the operator into more distilled, meaningful information.

Additionally, the alarm review and improvement process recommended by various standards and best practice guides involve a team of personnel manually examining and correcting the data engineering for each alarm individually. This approach is intractable for large power systems which may contain several hundred thousand alarms. Prioritizing the alarms to be reviewed and automatically providing data engineering suggestions can greatly speed up this alarm review process in the power industry.

Further, for user interfaces configured to display such alarms, the volume of alarms can make it difficult to present the alarms to the user for display. Previous related art systems have been directed to alarm squelching or elimination of alarms from display on the user interface, which could cause the operator to potentially miss important alarms if such alarms are miscategorized and squelched. Accordingly, there is a need to provide systems and methods to cluster and tag such alarms so that even though all alarms are present in the system, the alarms are tagged in clustered in a meaningful way so that the user can determine which groups of alarms to view on the user interface, while avoiding the elimination or squelching of such alarms from being provided to the user interface in the first place.

Example implementations described herein are directed to systems and methods for a partially automated alarm review/data engineering workflow to make it easier to audit and meaningfully reconfigure existing alarm systems. To this end, the example implementations can facilitate systems and methods to group alarms and make the groups more comprehensible and interactive for the users. Alarms that are identified for review are ranked in a priority order such that the alarms that can benefit most for reconfiguration are given higher precedence than less problematically configured alarms.

In accordance with the invention, there can include a method for management of alarm text data for received alarms, which can involve processing the alarm text data for clustering to generate processed alarm text data; clustering the processed alarm text data into first clusters through executing a first clustering algorithm, the first clustering algorithm configured to be facilitated via accelerated processing; for the first clusters not meeting a metric, executing a second clustering algorithm on the first clusters to form second clusters that are representative of subgroups of the first clusters with improved homogeneity, the second clustering algorithm being different from the first clustering algorithm; executing a tagging process on the second clusters and ones of the first clusters that meet the metric to tag the second clusters and the ones of the first clusters that meet the metric into groups to form tagged cluster groups; and providing the tagged cluster groups to be displayed on the user interface, the user interface configured to filter the received alarm for display based on a received selection of the tagged cluster groups.

The method advantageously achieves a presentation of alarms on the user interface with associated cluster tags that meet a desired metric such as a score indicative of cluster homogeneity, thereby allowing all alarms to be presented on the user interface without the need for squelching or pre-filtering alarms to be provided to the user interface. Users can then filter the alarms through the user interface through selection of the desired tagged cluster groups, while preserving access to all of the alarms received.

The metric may involve a score indicative of cluster homogeneity.

The processing the alarm text data for clustering may involve executing a feature extraction process on the alarm text data based on managed domain knowledge associated with the alarm text data to generate extracted features; and executing a language model on the generated extracted features to form the processed alarm text data, the language model selected based on one or more clustering metrics.

The first clustering algorithm may involve a k-means clustering algorithm.

The second clustering algorithm may involve a hierarchical clustering algorithm.

For the first clusters meeting the metric, the method may further involve executing the tagging process on the first clusters to tag the first clusters into groups to form the tagged cluster groups; and providing the tagged cluster groups to be displayed on the user interface.

The tagging process may involve utilizing a frequency-based scoring process.

The tagging process may involve executing a topic modeling process to generate candidate topics as the groups, wherein the candidate topics may be weighted based on provided rankings.

The execution of the second clustering algorithm on the first clusters to form second clusters may be conducted iteratively until the metric is met.

The method may involve displaying the received alarms to synchronous users in chronological order on the user interface, the display interface configured to display associated ones of the tagged cluster groups for each of the received alarms, the user interface configured to receive the selection for ones of the displayed tagged cluster groups and filter the alarms according to selected ones of the displayed tagged cluster groups.

The method may further involve displaying the received alarms associated with the alarm text data to asynchronous users on the user interface, the user interface configured to display associated distances between one or more of the tagged cluster groups.

The metric may involve a score indicative of urgency.

The received alarms may be from a power system control domain.

The alarm text data may include non-natural language text (e.g., cryptic text).

The methods described above can be executed by an apparatus having a processor.

The methods described above can be stored as instructions in a computer readable medium. The computer readable medium can be in the form of a non-transitory computer readable medium and executed by one or more processors.

The invention can further involve a system having means for the methods as described above.

### BRIEF DESCRIPTION OF DRAWINGS

FIG. 1 illustrates an example flow diagram for the alarm-text clustering through using a hybrid clustering method and tagging of clusters, in accordance with an example implementation.
FIG. 2 illustrates an example of determining the selection of the language model for text embedding, in accordance with the desired implementation.
FIGS. 3A to 3C illustrate examples of hybrid clustering in accordance with an example implementation.
FIGS. 4A to 4D illustrate an example of frequency-based tagging of clusters and visualization thereof with word clouds, in accordance with an example implementation.
FIG. 5 illustrates an example of labeling clusters in a supervised or semi-supervised way, in accordance with an example implementation.
FIG. 6 illustrates an example user interface for displaying clusters of alarms to synchronous users, in accordance with an example implementation.
FIG. 7 illustrates an example user interface for displaying clusters of alarms for asynchronous users, in accordance with an example implementation.
FIG. 8 illustrates a plurality of physical systems that are networked to a management apparatus, in accordance with an example implementation.
FIG. 9 illustrates an example computing environment with an example computer device suitable for use in some example implementations.

### DETAILED DESCRIPTION

The following detailed description provides details of the figures and example implementations of the present application. Reference numerals and descriptions of redundant elements between figures are omitted for clarity. Terms used throughout the description are provided as examples and are not intended to be limiting. For example, the use of the term "automatic" may involve fully automatic or semi-automatic implementations involving user or administrator control over certain aspects of the implementation, depending on the desired implementation of one of the ordinary skills in the art practicing implementations of the present application. Selection can be conducted by a user through a user interface or other input means, or can be implemented through a desired algorithm. Example implementations as described herein can be utilized either singularly or in combination, and the functionality of the example implementations can be implemented in any manner in accordance with the desired implementation.

The example implementations described herein involve an intelligent grouping method for alarm text generated by control systems (e.g., power network control systems) in order to improve data configuration. While clustering texts using Machine Learning (ML) has become a mature field of research, the power system alarm data texts are usually not in a natural language form, and thus require rigorous processing tailored for the use case to render meaningful clusters. To that end, the example implementations described herein involve proposed data processing, clustering of alarms based on textual descriptions and other relevant features, ways of highlighting the important attributes of the clusters, as well as tagging and making such clusters comprehensible to users by adopting a self-explanatory and interactive user interface (UI) platform for alarm review. Other classes of alarms for review can also be included in the alarm review platform in accordance with the desired implementation.

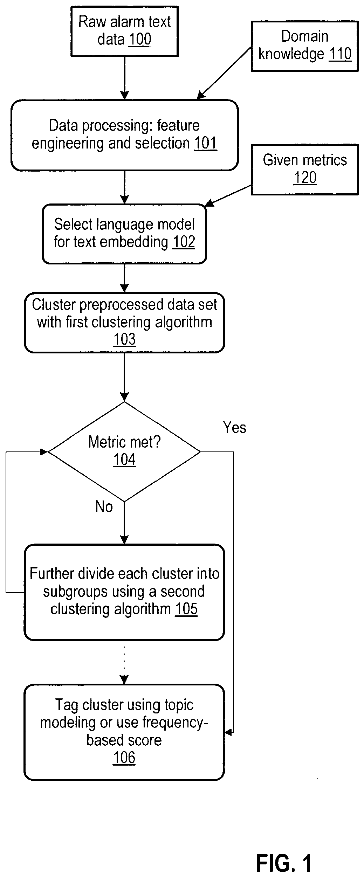

FIG. 1 illustrates an example flow diagram for the alarm-text clustering through using a hybrid clustering method and tagging of clusters, in accordance with an example implementation.

At first, raw alarm text data 100 is provided to data processing 101 for processing the alarm text. In example implementations described herein, a pre-processing of the alarm text can be conducted by using the heterogeneous information as features provided in the alarm dataset. The important features that will be used as inputs to the language model downstream can be either manually extracted or done so automatically depending on the desired implementation. Feature extraction processes can also utilize a database of domain knowledge 110 to facilitate the feature engineering and selection.

Features that can be used can include, but are not limited to, raw text, point class type, alarm group type, subsystem, station, priority, time stamp, reason code, previous state, new state, event parameters, and so on in accordance with the desired implementation.

If the alarm text is cryptic (e.g., not solely in natural language, is alphanumeric, and so on.) and is available in more than one natural language, unifying the cryptic text in different languages into a base language can also be part of the preprocessing. Another relevant way of preprocessing the alarm text is to look up cryptic substrings in available dictionaries / vocabularies for creating semantic embeddings. Example implementations can do this by first augmenting a description of the alphanumeric substring in the raw text in natural language, followed by a summarization, and creating the embedding to be used in a language model. The cryptic substrings and correspondingly created description pairs can also be uses as a prompt to a Large Language Model (LLM) for downstream tasks (e.g., explanations of alarms, recommendation or instruction for action, and so on). Such descriptions can potentially be used in refining clusters with better explainability.

At 102, the flow selects a language model for text embedding based on given clustering metrics 120. In example implementations described herein, language models for both word embedding and sentence embedding can be used. Such language models for text embedding can also be configured to add other relevant features (e.g., user given, or automatically selected) with raw text description, string concatenation, embedding concatenation, and otherwise in accordance with the desired implementation. As will be described herein, clustering metrics can include, but is not limited to, inertia, clustering time, number of clusters, and so on. These parameters can be frozen.

At 103, a first clustering algorithm is utilized to cluster the preprocessed data set from the flows of 101 and 102 to generate clusters. In the flow at 103, a clustering algorithm that can be parallel processed across multiple cores is utilized to generate the first set of clusters. In example implementations described herein, such a clustering algorithm can include, but is not limited to, K-means, which is a computationally efficient clustering algorithm that can be parallel processed using multiple cores. The first clustering algorithm can involve trainable parameters and can be trained based on external information fed to the machine learning model.

As will be described herein with respect to the flows of 103 to 105, two different types of clustering algorithms are utilized. The first clustering algorithm used is an algorithm that can be parallel processed and is computationally efficient (e.g., can process large amount of data, relatively fast clustering but may yield non-so-homogeneous clusters). The second clustering algorithm used will differ from the first clustering algorithm to be more refined for improvement of homogeneity, such as agglomerative hierarchical clustering. While the first clustering algorithm (e.g., K-Means) is of the type that is computationally efficient and can be processed using multiple cores, the relative gains in homogeneity in subgroups for different numbers of clusters is not very clear from the elbow method. Further, the methods often give a large number of clusters for relatively low inertia, which is hard to comprehend and track. The first and second clustering algorithms can involve trainable parameters.

More refined clustering, such as hierarchical clustering, tends to yield lower number of clusters and the relative gain of homogeneity is usually more explainable (e.g., using a dendrogram). However, it is computationally more expensive and does not scale well for large datasets. Thus, as illustrated in example implementations herein, a hybrid method is utilized by first clustering the large dataset using a first clustering algorithm (e.g., K-Means) as shown at 103, and then reducing the inhomogeneity within each cluster by further clustering it with a more refined clustering algorithm, if needed, such as through hierarchical methods.

Accordingly, at 104, a determination is made as to whether a desired metric has been met. In an example implementation, the desired metric can be a desired level of homogeneity. It is possible for smaller and/or fairly homogenous data sets that the first clustering algorithm may be sufficient for producing the desired homogeneity. If so (Yes) the flow proceeds to 106, otherwise (No), the flow proceeds to 105. Note that the step at 104 can be omitted in some systems in which the alarm datasets are always expected to be large.

Besides homogeneity, other metrics may also be utilized in accordance with the desired implementation and the present disclosure is not limited thereto. For example, if some alerts are alerts that need to be presented in real-time due to their urgency, then such alarms can be processed by the first clustering algorithm at 104 and then tagged at 106 without executing the second clustering algorithm at 105. Thus, if the alarm does not meet a sufficient urgency level as defined by any desired implementation known in the art, then the flow can proceed to 105 to execute the second clustering algorithm.

At 105, the second clustering algorithm will further divide each cluster into subgroups using a second clustering algorithm such as hierarchical clustering. The second clustering algorithm differs from the first clustering algorithm in that more refined clustering is used based on the clusters that are provided. Although computationally expensive, the computational cost can be reduced through executing the second clustering algorithm on the first set of clusters produced by the first clustering algorithm. After the second clustering algorithm is executed, the second set of clusters are formed. Depending on the desired implementation, the flow can be iterated and return to the flow at 104 to determine if the second set of clusters meet the desired metric such as homogeneity. Alternatively, depending on the desired implementation, the iteration can be skipped as shown in the dashed arrow in order to ensure that the clustered alarms are provided in a timely manner.

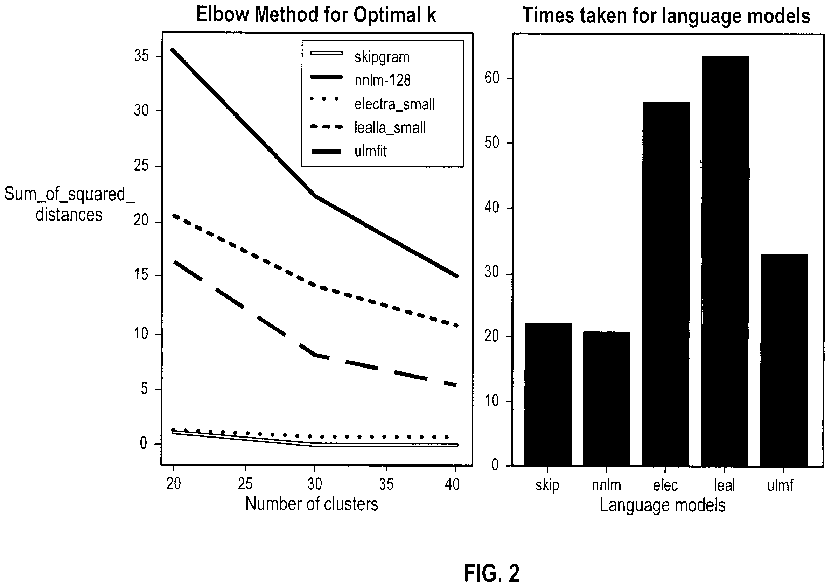

FIG. 2 illustrates an example of determining the selection of the language model for text embedding 102, in accordance with the desired implementation. Prior to the clustering through the first clustering algorithm 103, the text is first embedded using some language model at 102. As is mentioned in the previous section, various models for text embedding are applied along with other relevant features. Depending on the language model used, an inherent tradeoff may arise between the time of processing and the inertia which captures the degree of homogeneity in the clusters (lower inertia indicates higher homogeneity). The optimal number of clusters and language model can be selected, for example, by comparing the time of processing and inertia for each model to find the near optimal number of clusters, as is shown in FIG. 2. The best language model can be chosen based on the tradeoff between inertia and clustering time. For example, the ulmfit language model can provide low enough inertia and fast enough clustering time. The 'best' language model varies with use cases and alarm text data, but in general the sentence encoders such as ulmfit tend to work better (e.g., slower clustering but the resultant clusters are more meaningful) than word encoders such as skip gram (e.g., fast clustering but the resultant clusters are less meaningful).

As shown in FIG. 2, for a large dataset a low sum of square intracluster distance may result in a high number of clusters. This can be hard to interpret by alarm handling human operatives, or difficult to display in a user interface in a meaningful manner. Thus, to make the clusters more easily comprehensible to the users and to facilitate better displayability and filtering functionality of user interfaces for the alarms, each of these clusters are divided into homogeneous subgroups using a more refined second clustering algorithm such as agglomerative hierarchical clustering, which yields a low number of clusters while retaining sufficient homogeneity.

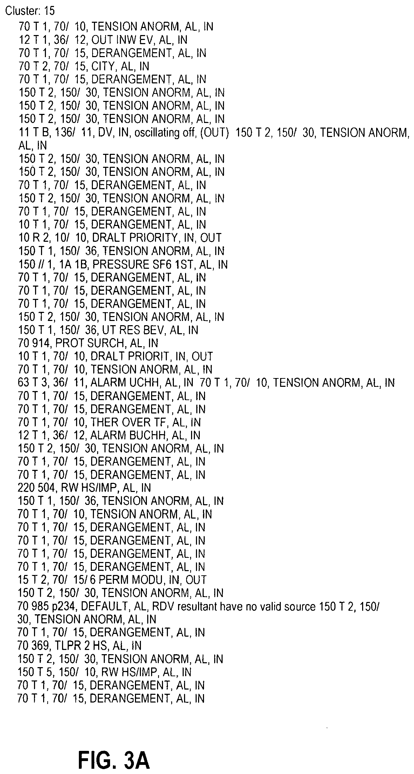

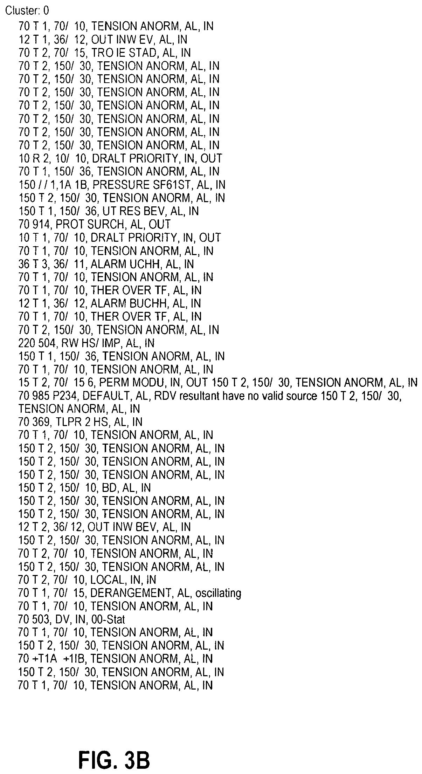

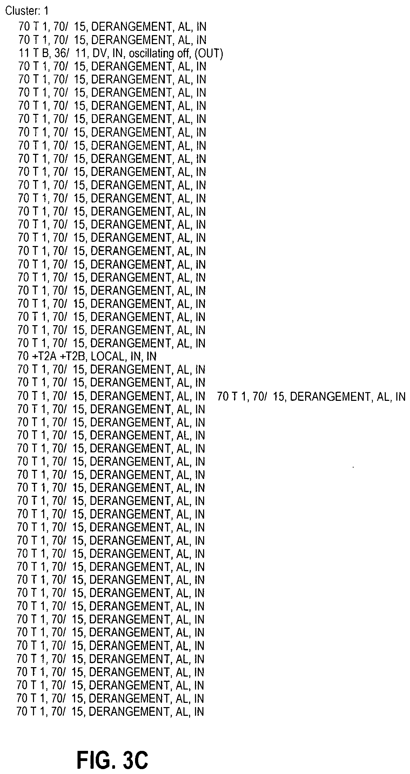

FIGS. 3A to 3C illustrate examples of hybrid clustering in accordance with an example implementation. Specifically, the examples of FIGS. 3A to 3C illustrate a hybrid clustering where a large dataset is first clustered into 20 clusters using ulmfit language model for text embedding and K-Means for the first clustering algorithm. Then, each of the clusters is further divided into two homogeneous subgroups using agglomerative hierarchical clustering as the second clustering algorithm. FIG. 3A illustrates the clustering of the entire dataset using K-Means, for which part of Cluster 15 is illustrated. FIG. 3B and FIG. 3B illustrate examples of two sub-clusters of Cluster 15 using agglomerative hierarchical clustering.

Once the alarm text is clustered (grouped), it is important to tag the clusters or represent the important contents in a meaningful way as illustrated at the flow of 106 of FIG. 1. In the example of FIG. 1, two example methods of tagging the clusters include topic modeling and frequency-based score, however, other tagging methods can also be utilized to fulfill the desired implementation and the present disclosure is not limited thereto. The tagging of the clusters can involve fine-tunable parameters.

As will be described herein, the 'tagging' process is a two-step process, where in the first step, a set of 'topics' is learned for the cluster. Then a topic is chosen from the set based on a 'relevance' score (the topic with highest relevance is chosen). The score can be frequency / probability or any other non-negative weight-based function giving a non-negative scalar value. Then, in the second step of tagging process, a 'tag' is extracted from the chosen topic according to a post-processing algorithm (e.g., a dictionary of stop-words can be used, and an importance-based selection of substrings from the topic can be done).

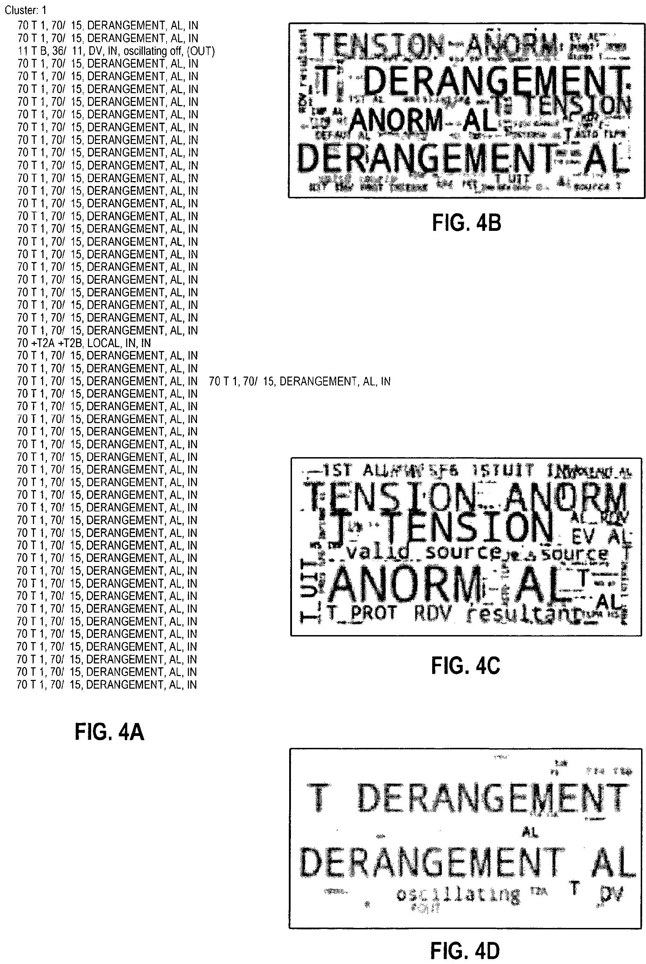

FIGS. 4A to 4D illustrate an example of frequency-based tagging of clusters and visualization thereof with word clouds, in accordance with an example implementation. In the example of FIG. 4A to 4D, some of the words (token) from each cluster are represented with a corresponding weight, where the weight signifies the importance of the word (token) with respect to the cluster. A frequency-based approach can be used to compute these candidates and visualize them using the word cloud python library, as is shown in FIG. 4A to 4D. As is seen in FIG. 4B, Derangement and Anorm seem to be top two important element in the cluster, whereas FIG. 4C and FIG. 4D shows that the sub clustering method learns to group Anorm and Derangement in two separate sub clusters, thus further reducing inhomogeneity in resulting clusters. When some substring appears in more than one clusters, then that substring is not very representative of the clusters and hence can be ignored. The substrings that are more 'unique' to the cluster would be represented as a tag. For example, since the cryptic description "AL" belongs to both sub clusters, that description can be ignored.

Another way of depicting the important candidates in a cluster is to represent the 'topic' of the cluster using the ML topic modeling technique. In this method, each cluster is represented by a set of *N* topics, where *N* is either given apriori (can be given by user) or can be optimized. Each topic can involve some words (tokens) and the semantic importance of the words in a cluster is found by some trained topic model, such as Latent Dirichlet Allocation (LDA) model. The number of topics and the hyperparameters of the model can be optimized by maximizing the coherence score of the topics.

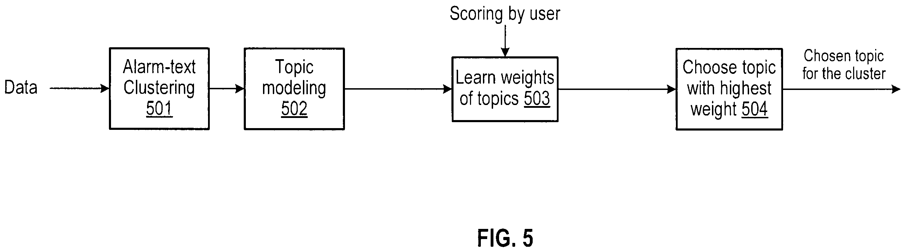

FIG. 5 illustrates an example of labeling clusters in a supervised or semi-supervised way, in accordance with an example implementation. Another way to tag alarm clusters is to label the groups. In the supervised way, the labels can be given by some domain experts and a ML model can be trained to predict the label of a new alarm (e.g., classification problem). Since it is tedious to label a large number of alarms, one way to automate the process is to use active learning to learn the labels for unlabeled alarms. In this method, a small portion of the alarms are labeled by a domain expert, an ML model learns to tag the unlabeled alarms using the labeled alarms as the training data, and from time to time asks an expert to correct the labels. An alternative way to incorporate domain expert feedback is to finetune the weights of tags (high frequency words in a cluster or topics) based on user's feedback (e.g., ranks of each topic). FIG. 5 illustrates a schematic diagram on how to predict the most suitable topic for a cluster using user feedback. One way to avoid getting domain expert feedback on a large cluster, which can be tedious and costly, is to get the feedback on the lowest level subgroups.

Accordingly, at 501, the alarm text clustering as described herein is executed. At 502, a topic modeling process can be executed to provide a number of candidate topics, herein denoted as k. The k-candidate topics are provided to a process to learn the weights of the topics at 503, which can also be based on the scoring or the ranking of the user as provided through an interface or beforehand in accordance with the desired implementation. In an example implementation, the process to learn the weights can involve *k*-class classification in which the topics can be ranked by the user, or can be provided beforehand. Other scoring functions can also be utilized instead of *k-*class classification, and the present disclosure is not limited thereto. The rankings are then used to generate weights for the *k* topics. The topic with the highest weight is then selected at 504 to be provided for the clusters.

Subsequently, the clusters need to be provided to the user on a user interface in a comprehensible way. A major challenge of the text clustering process is then representing the clusters to the end users in a meaningful way. There are two main classes of users that would need to interact with the clusters. The first class involves synchronous users, which are users that address alarms in real time, such as operators. The second class involves asynchronous users, which are users that analyze alarms not in real time, such as managers, or engineers.

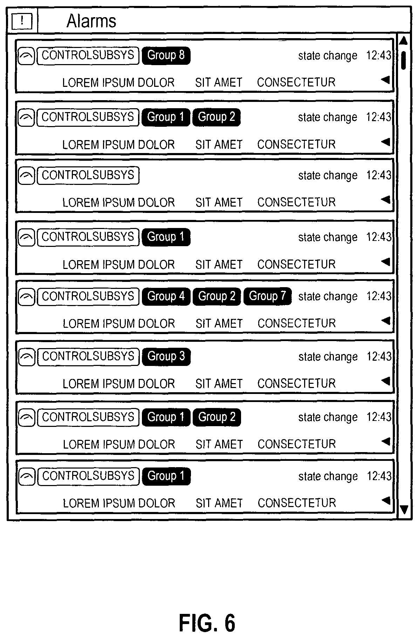

FIG. 6 illustrates an example user interface for displaying clusters of alarms to synchronous users, in accordance with an example implementation. The main task of synchronous users is to identify the critical incidents that caused the alarms, and correspondingly perform actions (e.g. call a maintenance worker) based of those incidents. They place a high priority in the alarm list to understand the chronological ordering of alarms and piece together a story of what incidents caused the alarms.

As illustrated in FIG. 6, there can be a split screen view of events and alarms. Alarms are displayed in the left column. Clusters are presented to the end user using the language of "groups". A single alarm will have a "group" associated with each cluster displayed as a tag on the alarm. A single alarm may have multiple group tags. Clicking the tag will filter the list to show only the alarms that are included in the cluster.

The text content of group tag can be determined by selecting frequently occurring lexical words (i.e. excluding prepositions such as "to" and determiners such as "the"). Frequency can be determined through techniques such as Term Frequency - Inverse Document Frequency (TF-1DF), which yields a normalized proportion of how often a given term occurs based off its uniqueness in all documents within a corpus.. Another method is to find the lexical word that minimizes the semantic distance between all other lexical words in the cluster. More methods are elaborated as described herein.

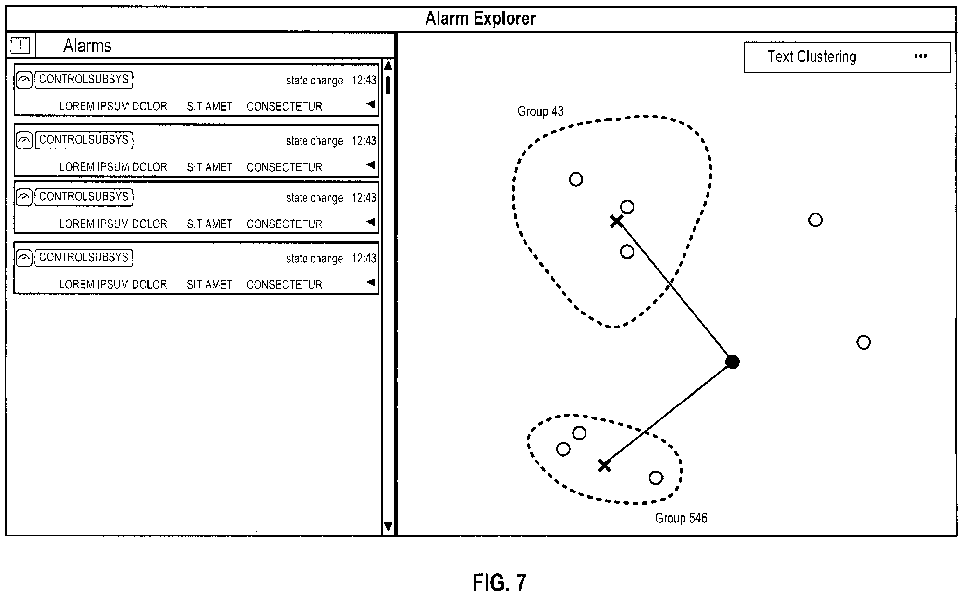

FIG. 7 illustrates an example user interface for displaying clusters of alarms for asynchronous users, in accordance with an example implementation. The main task of asynchronous users is to understand how well certain alarms are performing: do certain system events need to be alarms? Are the alarms understandable? Do the parameters of the alarm need tuning? Can more specific alarm groups (e.g., new point classes) be defined to improve alarm data engineering This task is typically not under time constraints and requires a holistic understanding of alarms through time.

An asynchronous user may open an "Alarm Review Wizard" or "Alarm Explorer". In the user interface they are presented with a two-column view. The leftmost column contains a simple list of alarms, while the right column contains a 2D projection of the text clusters. The projection is accomplished with a dimensionality reduction technique such as tSNE. In the 2D display, the boundaries between the groups are demarcated by enclosing curves. A user can highlight an alarm by mousing over it. When highlighted, the alarm shows the distance to the closest cluster centroids.

Through the example implementations described herein, the alarm texts, especially for systems that have numerous alarms such as power systems, can become more comprehensible by grouping them through combining domain knowledge and machine learning. Further, although a major part of the alarm data is textual, the text is often encrypted and not made of natural languages. Suitable dictionaries are used for comprehension of such texts and to facilitate efficient grouping through the example implementations described herein.

Further, the example implementations described herein facilitate a hybrid approach to alarm text clustering so that the grouping is efficient and scalable for large datasets and the resulting subgroups are more homogeneous and interpretable.

In addition, the example implementations provide multiple methods of tagging the alarm groups to make them more interpretable. To make the groups more understandable, provisions of tagging the groups by utilizing user feedback and displaying the groups efficiently is also utilized in example implementations.

Example implementations described herein involve domain knowledge driven feature selection and feature engineering of attributes such as power system attributes, and can facilitate the selection of a suitable candidate language model(s) for alarm text clustering. The example implementations described herein further provide a hybrid approach to alarm text clustering for efficient processing of a large dataset and with sufficiently low number of clusters with satisfactory homogeneity. The clusters are tagged in an interpretable way, and the alarm review wizard is tailored to power system alarms/alarm text.

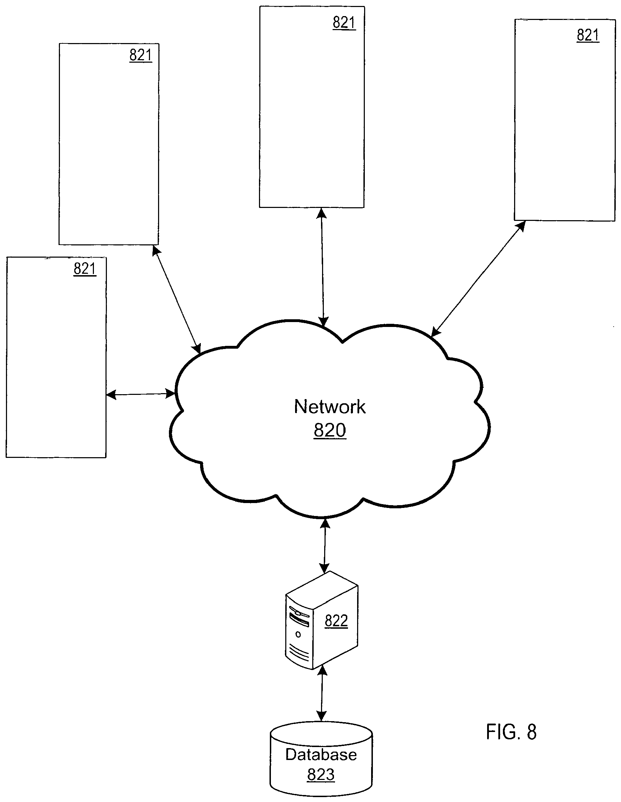

FIG. 8 illustrates a plurality of physical systems that are networked to a management apparatus, in accordance with an example implementation. One or more physical systems 821 (e.g., power systems, transformers, industrial equipment, etc..) involve physical machines that are communicatively coupled to a network 820 (e.g., local area network (LAN), wide area network (WAN)) through the corresponding network interface of the sensor system installed in the physical systems 821, which is connected to a management apparatus 822 configured to facilitate the functionality of the maintenance work support system 600 for supporting maintenance work on a machine of the physical systems 821. The one or more systems 821 may or may not be associated with sensors, depending on the desired implementation. The management apparatus 822 manages a database 823, which contains historical data collected from the sensor systems from each of the physical systems 821. In alternate example implementations, the data from the sensor systems of the physical systems 821 can be stored in a central repository or central database such as proprietary databases that intake data from the physical systems 821, or systems such as enterprise resource planning systems, and the management apparatus 822 can access or retrieve the data from the central repository or central database. The sensor systems of the physical systems 821 can include any type of sensors to facilitate the desired implementation and provide internal status machine data, such as any alarms that are to be provided based on the sensor data in accordance with the desired implementation.

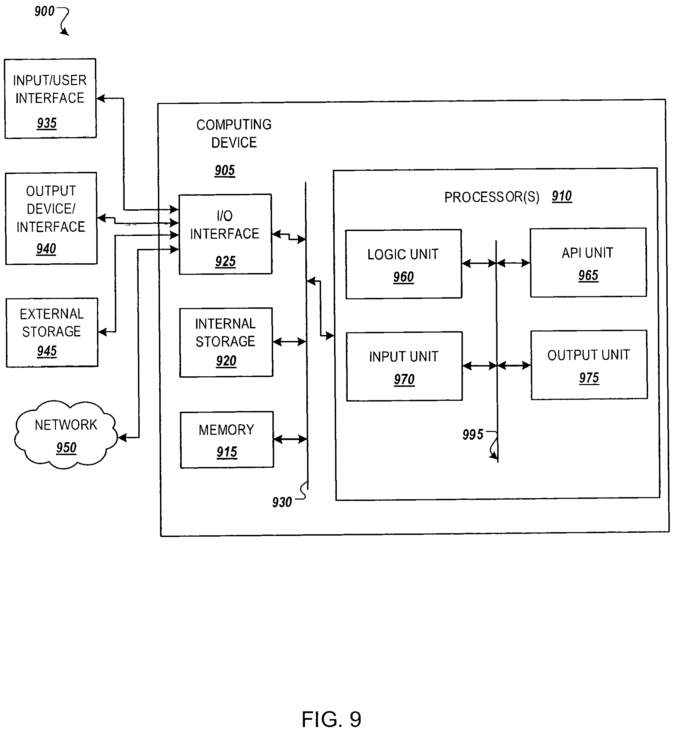

FIG. 9 illustrates an example computing environment with an example computer device suitable for use in some example implementations, such as the management apparatus 822 of FIG. 8. Computer device 905 in computing environment 900 can include one or more processing units, cores, or processors 910, memory 915 (e.g., RAM, ROM, and/or the like), internal storage 920 (e.g., magnetic, optical, solid state storage, and/or organic), and/or I/O interface 925, any of which can be coupled on a communication mechanism or bus 930 for communicating information or embedded in the computer device 905. I/O interface 925 is also configured to receive images from cameras or provide images to projectors or displays, depending on the desired implementation.

Computer device 905 can be communicatively coupled to input/user interface 935 and output device/interface 940. Either one or both of input/user interface 935 and output device/interface 940 can be a wired or wireless interface and can be detachable. Input/user interface 935 may include any device, component, sensor, or interface, physical or virtual, that can be used to provide input (e.g., buttons, touch-screen interface, keyboard, a pointing/cursor control, microphone, camera, braille, motion sensor, optical reader, and/or the like). Output device/interface 940 may include a display, television, monitor, printer, speaker, braille, or the like. In some example implementations, input/user interface 935 and output device/interface 940 can be embedded with or physically coupled to the computer device 905. In other example implementations, other computer devices may function as or provide the functions of input/user interface 935 and output device/interface 940 for a computer device 905.

Examples of computer device 905 may include, but are not limited to, highly mobile devices (e.g., smartphones, devices in vehicles and other machines, devices carried by humans and animals, and the like), mobile devices (e.g., tablets, notebooks, laptops, personal computers, portable televisions, radios, and the like), and devices not designed for mobility (e.g., desktop computers, other computers, information kiosks, televisions with one or more processors embedded therein and/or coupled thereto, radios, and the like).

Computer device 905 can be communicatively coupled (e.g., via I/O interface 925) to external storage 945 and network 950 for communicating with any number of networked components, devices, and systems, including one or more computer devices of the same or different configuration. Computer device 905 or any connected computer device can be functioning as, providing services of, or referred to as a server, client, thin server, general machine, special-purpose machine, or another label.

I/O interface 925 can include, but is not limited to, wired and/or wireless interfaces using any communication or I/O protocols or standards (e.g., Ethernet, 802.11x, Universal System Bus, WiMax, modem, a cellular network protocol, and the like) for communicating information to and/or from at least all the connected components, devices, and network in computing environment 900. Network 950 can be any network or combination of networks (e.g., the Internet, local area network, wide area network, a telephonic network, a cellular network, satellite network, and the like).

Computer device 905 can use and/or communicate using computer-usable or computer-readable media, including transitory media and non-transitory media. Transitory media include transmission media (e.g., metal cables, fiber optics), signals, carrier waves, and the like. Non-transitory media include magnetic media (e.g., disks and tapes), optical media (e.g., CD ROM, digital video disks, Blu-ray disks), solid state media (e.g., RAM, ROM, flash memory, solid-state storage), and other non-volatile storage or memory.

Computer device 905 can be used to implement techniques, methods, applications, processes, or computer-executable instructions in some example computing environments. Computer-executable instructions can be retrieved from transitory media, and stored on and retrieved from non-transitory media. The executable instructions can originate from one or more of any programming, scripting, and machine languages (e.g., C, C++, C#, Java, Visual Basic, Python, Perl, JavaScript, and others).

Processor(s) 910 can execute under any operating system (OS) (not shown), in a native or virtual environment. One or more applications can be deployed that include logic unit 960, application programming interface (API) unit 965, input unit 970, output unit 975, and inter-unit communication mechanism 995 for the different units to communicate with each other, with the OS, and with other applications (not shown). The described units and elements can be varied in design, function, configuration, or implementation and are not limited to the descriptions provided. Processor(s) 910 can be in the form of hardware processors such as central processing units (CPUs) or in a combination of hardware and software units.

In some example implementations, when information or an execution instruction is received by API unit 965, it may be communicated to one or more other units (e.g., logic unit 960, input unit 970, output unit 975). In some instances, logic unit 960 may be configured to control the information flow among the units and direct the services provided by API unit 965, input unit 970, output unit 975, in some example implementations described above. For example, the flow of one or more processes or implementations may be controlled by logic unit 960 alone or in conjunction with API unit 965. The input unit 970 may be configured to obtain input for the calculations described in the example implementations, and the output unit 975 may be configured to provide output based on the calculations described in example implementations.

Processor(s) 910 may execute a method or instructions for management of alarm text data for received alarms, which can involve processing the alarm text data for clustering to generate processed alarm text data (101, 102); clustering the processed alarm text data into first clusters through executing a first clustering algorithm (103), the first clustering algorithm configured to be facilitated via accelerated processing; for the first clusters not meeting a metric, executing a second clustering algorithm on the first clusters to form second clusters that are representative of subgroups of the first clusters with improved homogeneity, the second clustering algorithm being different from the first clustering algorithm (105); executing a tagging process on the second clusters and ones of the first clusters that meet the metric to tag the second clusters and the ones of the first clusters that meet the metric into groups to form tagged cluster groups (106); and providing the tagged cluster groups to be displayed on the user interface, the user interface configured to filter the received alarm for display based on a received selection of the tagged cluster groups (as illustrated in FIGS. 6 and 7). The first clustering algorithm can be configured to be facilitate via accelerated processing in a manner such as, but not limited to, parallel processing.

Depending on the desired implementation, the metric may involve a score indicative of cluster homogeneity, such as, for example, the inertia as illustrated in FIG. 2.

Processor(s) 910 can be configured to execute the method or instructions as described above, wherein the processing the alarm text data for clustering can involve executing a feature extraction process (101) on the alarm text data based on managed domain knowledge associated with the alarm text data to generate extracted features; and executing a language model (102) on the generated extracted features to form the processed alarm text data, the language model selected based on one or more clustering metrics and as described with respect to FIG. 2. Such clustering metrics can involve, but are not limited to, inertia, clustering time, number of clusters, and so on to facilitate the desired implementation.

As described herein, the first clustering algorithm can involve a k-means clustering algorithm.

As described herein, the second clustering algorithm can involve a hierarchical clustering algorithm.

Processor(s) 910 can be configured to execute the method or instructions as described herein, wherein, for the first clusters meeting the metric, the processor(s) 910 can be configured to execute the tagging process on the first clusters to tag the first clusters into groups to form the tagged cluster groups (104, 106); and providing the tagged cluster groups to be displayed on the user interface as illustrated in FIG. 6 and FIG. 7.

As described herein, the tagging process can involve utilizing a frequency-based scoring process as illustrated in FIGS. 4A to 4D.

Processor(s) 910 can be configured to execute the method or instructions as described herein, wherein the tagging process can involve executing a topic modeling process to generate candidate topics as the groups, wherein the candidate topics are weighted based on provided rankings as illustrated in FIG. 5.

Depending on the desired implementation, the execution of the second clustering algorithm on the first clusters to form second clusters is conducted iteratively until the metric is met as illustrated from 104 to 106 of FIG. 1.

Processor(s) 910 can execute the method or instructions as described above, and further involve displaying the received alarms to synchronous users in chronological order on the user interface, the display interface configured to display associated ones of the tagged cluster groups for each of the received alarms, the user interface configured to receive the selection for ones of the displayed tagged cluster groups and filter the alarms according to selected ones of the displayed tagged cluster groups as illustrated in FIG. 6.

Processor(s) 910 can execute the method or instructions as described above, and further involve displaying the received alarms associated with the alarm text data to asynchronous users on the user interface, the user interface configured to display associated distances between one or more of the tagged cluster groups as illustrated in FIG. 7.

Depending on the desired implementation, the metric can also involve a score indicative of urgency. Such an urgency metric can be set in accordance with any desired implementation and can be based on any aspect of the alarm (e.g., urgency indicated in metadata, keywords, etc.)

As illustrated in FIG. 8, the received alarms and the system can be from a power system control domain.

As illustrated in FIGS. 3A to 4D, the alarm text data may involve non-natural language text or cryptic text. Through the example implementations described herein, even if the text is non-natural language or cryptic, such alarms can be clustered and grouped as described, in contrast to the related art.

Some portions of the detailed description are presented in terms of algorithms and symbolic representations of operations within a computer. These algorithmic descriptions and symbolic representations are the means used by those skilled in the data processing arts to convey the essence of their innovations to others skilled in the art. An algorithm is a series of defined steps leading to a desired end state or result. In example implementations, the steps carried out require physical manipulations of tangible quantities for achieving a tangible result.

Unless specifically stated otherwise, as apparent from the discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

Example implementations may also relate to an apparatus for performing the operations herein. This apparatus may be specially constructed for the required purposes, or it may include one or more general-purpose computers selectively activated or reconfigured by one or more computer programs. Such computer programs may be stored in a computer readable medium, such as a computer readable storage medium or a computer readable signal medium. A computer readable storage medium may involve tangible mediums such as, but not limited to, optical disks, magnetic disks, read-only memories, random access memories, solid-state devices and drives, or any other types of tangible or non-transitory media suitable for storing electronic information. A computer readable signal medium may include mediums such as carrier waves. The algorithms and displays presented herein are not inherently related to any particular computer or other apparatus. Computer programs can involve pure software implementations that involve instructions that perform the operations of the desired implementation.

Various general-purpose systems may be used with programs and modules in accordance with the examples herein, or it may prove convenient to construct a more specialized apparatus to perform desired method steps. In addition, the example implementations are not described with reference to any particular programming language. It will be appreciated that a variety of programming languages may be used to implement the teachings of the example implementations as described herein. The instructions of the programming language(s) may be executed by one or more processing devices, e.g., central processing units (CPUs), processors, or controllers.

As is known in the art, the operations described above can be performed by hardware, software, or some combination of software and hardware. Various aspects of the example implementations may be implemented using circuits and logic devices (hardware), while other aspects may be implemented using instructions stored on a machine-readable medium (software), which if executed by a processor, would cause the processor to perform a method to carry out implementations of the present application. Further, some example implementations of the present application may be performed solely in hardware, whereas other example implementations may be performed solely in software. Moreover, the various functions described can be performed in a single unit, or can be spread across a number of components in any number of ways. When performed by software, the methods may be executed by a processor, such as a general-purpose computer, based on instructions stored on a computer readable medium. If desired, the instructions can be stored in the medium in a compressed and/or encrypted format.

Moreover, other implementations of the present application will be apparent to those skilled in the art from consideration of the specification and practice of the teachings of the present application. Various aspects and/or components of the described example implementations may be used singly or in any combination. It is intended that the specification and example implementations be considered as examples only, with the true scope and spirit of the present application being indicated by the following claims.

## Claims

1. A method for management of alarm text data for received alarms, comprising:
processing the alarm text data for clustering to generate processed alarm text data;
clustering the processed alarm text data into first clusters through executing a first clustering algorithm, the first clustering algorithm configured to be facilitated via accelerated processing;
for the first clusters not meeting a metric:
executing a second clustering algorithm on the first clusters to form second clusters that are representative of subgroups of the first clusters with improved homogeneity, the second clustering algorithm being different from the first clustering algorithm;
executing a tagging process on the second clusters and ones of the first clusters that meet the metric to tag the second clusters and the ones of the first clusters that meet the metric into groups to form tagged cluster groups; and
providing the tagged cluster groups to be displayed on a user interface, the user interface configured to filter the received alarms for display based on a received selection of the tagged cluster groups.

2. The method according to any of the preceding claims, wherein the metric comprises a score indicative of cluster homogeneity.

3. The method according to any of the preceding claims, wherein the processing the alarm text data for clustering comprises:
executing a feature extraction process on the alarm text data based on managed domain knowledge associated with the alarm text data to generate extracted features; and
executing a language model on the generated extracted features to form the processed alarm text data, the language model selected based on one or more clustering metrics.

4. The method according to any of the preceding claims, wherein the first clustering algorithm is a k-means clustering algorithm.

5. The method according to any of the preceding claims, wherein the second clustering algorithm is a hierarchical clustering algorithm.

6. The method according to any of the preceding claims, wherein, for the first clusters meeting the metric:
executing the tagging process on the first clusters to tag the first clusters into groups to form the tagged cluster groups; and
providing the tagged cluster groups to be displayed on the user interface.

7. The method according to any of the preceding claims, wherein the tagging process comprises utilizing a frequency-based scoring process.

8. The method according to any of claims 1 to 6, wherein the tagging process comprises executing a topic modeling process to generate candidate topics as the groups, wherein the candidate topics are weighted based on provided rankings.

9. The method according to any of the preceding claims, wherein the execution of the second clustering algorithm on the first clusters to form the second clusters is conducted iteratively until the metric is met.

10. The method according to any of the preceding claims, further comprising displaying the received alarms to synchronous users in chronological order on the user interface, the display interface configured to display associated ones of the tagged cluster groups for each of the received alarms, the user interface configured to receive the selection for ones of the displayed tagged cluster groups and filter the alarms according to selected ones of the displayed tagged cluster groups.

11. The method according to any of the preceding claims, further comprising displaying the received alarms associated with the alarm text data to asynchronous users on the user interface, the user interface configured to display associated distances between one or more of the tagged cluster groups.

12. The method according to any of the preceding claims, wherein the metric comprises a score indicative of urgency.

13. The method according to any of the preceding claims, wherein the received alarms are from a power system control domain.

14. The method according to any of the preceding claims, wherein the alarm text data comprises non-natural language text.

15. An apparatus comprising a processor configured to execute the method according to claims 1-14.

16. A computer-readable medium, storing instructions for executing the method according to claims 1-14.
